(19) Europäisches Patentamt
European Patent Office
Office européen des brevets

(11) **EP 1 851 528 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(21) Anmeldenummer: **06707115.9**

(22) Anmeldetag: **21.02.2006**

(51) Int Cl.:
***G01N 13/02*** *(2006.01)*

(86) Internationale Anmeldenummer:
**PCT/EP2006/001537**

(87) Internationale Veröffentlichungsnummer:
**WO 2006/087228 (24.08.2006 Gazette 2006/34)**

(54) **VERFAHREN UND VORRICHTUNG ZUM MESSEN DER OBERFLÄCHENSPANNUNG VON FLÜSSIGKEITEN**

METHOD AND DEVICE FOR MEASURING THE SURFACE TENSION OF LIQUIDS

PROCEDE ET DISPOSITIF POUR MESURER LA TENSION SUPERFICIELLE DE LIQUIDES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.02.2005 DE 102005007870**

(43) Veröffentlichungstag der Anmeldung:
**07.11.2007 Patentblatt 2007/45**

(73) Patentinhaber: **E.G.O. ELEKTRO-GERÄTEBAU GmbH**
**75038 Oberderdingen (DE)**

(72) Erfinder:
• **SCHÜMANN, Daniel**
**01328 Dresden (DE)**

• **MÜNZNER, Rainer**
**08340 Schwarzenberg (DE)**

(74) Vertreter: **Patentanwälte**
**Ruff, Wilhelm, Beier, Dauster & Partner**
**Postfach 10 40 36**
**70035 Stuttgart (DE)**

(56) Entgegenhaltungen:
**EP-A- 1 464 948          DE-A1- 4 303 133**
**DE-C1- 19 755 291        DE-U1- 20 318 463**
**DE-U1-202004 007 261**

• **FAINERMAN ET AL: "Accurate analysis of the bubble formation process in maximum bubble pressure tensiometry" REVIEW OF SCIENTIFIC INSTRUMENTS, Bd. 75, Nr. 1, Januar 2004 (2004-01), XP002380167**

**Beschreibung**

Die Erfindung betrifft ein Verfahren und eine Vorrichtung zum Messen der Oberflächenspannung von Flüssigkeiten nach dem Blasendruckprinzip, wobei bei einem definierten Gasmassen- bzw. -volumenstrom ein Blasenparameter an einer in die Flüssigkeit getauchten Kapillarspitze erfasst und daraus die Oberflächenspannung berechnet wird.

Die Oberflächenspannung $\sigma$ gibt an, welche Arbeit verrichtet werden muss, um eine Oberfläche an der Grenzfläche flüssig gasförmig um einen bestimmten Betrag zu vergrößern. Sie gibt somit zum Beispiel Aufschluss über die Konzentration und die Wirksamkeit von Tensiden in Flüssigkeiten, beispielsweise zur Qualitätskontrolle von Tinten oder Wässern in Wasch- und Reinigungsprozessen.

Beim Blasendruckprinzip wird ein Gas oder Gasgemisch, für gewöhnlich Luft, durch eine mit einem pneumatischen System verbundene Kapillare in eine zu analysierende Flüssigkeit gedrückt und der Innendruck $p$ der sich an der Kapillare bildenden Blase gemessen.

Bei dem Verfahren des maximalen Blasendrucks wird der maximale Blasendruck $p_{max}$ gemessen. Der auf die Blase wirkende hydrostatische Druck $p_h$ berechnet sich aus der Eintauchtiefe $h_E$ der Kapillare, welche aufwendig erfasst bzw. eingestellt werden muss, und der Dichte der Flüssigkeit. Die Oberflächenspannung $\sigma$ wird dann mit dem Radius der Kapillare $r_{Kap}$ in erster Nährung berechnet nach:

$$\sigma \quad = \quad r_{Kap}/2 \quad (p_{max} \; - \; p_h) \qquad\qquad (1)$$

Beim einem hiervon abgeleiteten Verfahren des Differenzdruckes an einer Kapillare (DE 197 55 291 C1, DE 203 18 463 U1) wird die dynamische Oberflächenspannung $\sigma$ unter Ausnutzung der Korrelation $K$ zwischen der Oberflächenspannung $\sigma$ und dem Differenzdruck $\Delta p$ zwischen dem maximalen Innendruck $p_{max}$ und dem minimalen Innendruck $p_{min}$ der Blase berechnet:

$$\sigma \; = \; K \cdot \Delta p \quad \text{mit} \quad \Delta p = p_{max} \; - \; p_{min} \qquad\qquad (2)$$

Aufgrund der gleichen Wirkung des hydrostatischen Druckes auf $p_{min}$ und $p_{max}$ bleibt die Messung im Gegensatz zum Verfahren des maximalen Blasendrucks unabhängig von der Eintauchtiefe der Kapillare.

In tensidhaltigen Flüssigkeiten ist der Messwert der Oberflächenspannung $\sigma$ vom Alter der expandierenden Oberfläche abhängig, weil sich mit steigender Lebensdauer der Blase zunehmend Tenside an eine neu gebildete Blasenoberfläche anlagern können. Das Blasendruckprinzip erfasst demnach eine dynamische Oberflächenspannung, weshalb ein Messwert immer im Zusammenhang mit der dazugehörigen Blasenbildungszeit bzw. Blasenlebensdauer $t_{life}$ angegeben werden muss, worunter im Weiteren die Zeit zwischen Druckminimum und Druckmaximum der Blase verstanden sein soll.

Bekannte Blasendruckverfahren messen bei einer definierten Blasenfrequenz oder Blasenlebensdauer der austretenden Gasblasen, die entsprechend der sich dynamisch ändernden Oberflächenspannung immer wieder nachgeregelt werden müssen (DE 197 55 291 C1), den maximalen Blasendruck oder den Differenzdruck an einer Kapillare. Dafür wird eine steuerbare Luftpumpe bzw. ein den Luftstrom steuerndes Ventil benötigt.

Um die Oberflächenspannung hinreichend genau messen zu können, muss der verwendete Drucksensor vergleichsweise mit anderen Anwendungen eine hohe Messgenauigkeit haben.

Drucksensoren, die diese Anforderungen erfüllen, müssen beispielsweise temperaturkompensiert und kalibriert sein und sind deshalb das kostenintensivste Bauelement eines Messsystems.

Alternativen zur Wandlung des Blasendrucks in ein elektrisches Signal sind Schalldruckwandler wie Kondensator-, Tauchspulen-, Kristall- und Kohlemikrofone sowie piezoelektrische Scheiben (EP 0 760 472 B1, DE 196 36 644 C1). So wird nach EP 0 760 472 B1 mit einem kostengünstigen Schalldruckwandler die erste Ableitung des Drucksignals nach der Zeit gemessen und durch anschließende Integration der Blasendruck und daraus die Oberflächenspannung ermittelt. Messabweichungen, die durch den Einfluss der Umgebungstemperatur, die Luftfeuchtigkeit, die Frequenzabhängigkeit der Mikrofone im Übertragungsverhalten sowie durch Drift während einer Messung entstehen, sind unvermeidlich. Die Schalldruckwandler erfüllen die Genauigkeitsanforderungen an eine Druckmessung ohne zusätzliche Maßnahmen nicht.

Aus der DE 43 03 133 A1 ist bekannt, dass bei hinreichend konstanten Luftströmen die gemessene Blasenfrequenz der sich an einer Kapillare bildenden Blasen mit der Oberflächenspannung korreliert. Mit sinkender Oberflächenspannung steigt die Blasenfrequenz. Das Reziproke der Blasenfrequenz, die Blasenperiodenzeit, setzt sich aus der Blasenlebensdauer und der so genannten Blasentotzeit zusammen (DE 203 18 463 U1). Die Blasentotzeit bezeichnet die Zeit zwischen dem Druckmaximum, nach dessen Durchlauf die Blase aufplatzt und aufgeblasen wird, und dem Blasenabriss. Schon geringe Strömungen in der Flüssigkeit oder mechanische Vibrationen beeinflussen den Blasenabriss zufällig und erzeugen dadurch beim Messen der Oberflächenspannung durch die Blasenfrequenz hohe Messabweichungen. Die resultierende Messgenauigkeit ist beispielsweise für das Erfassen der Waschmittelkonzentration im Bereich der Textilreinigung nicht ausreichend.

Die DE 197 55 291 C1 beschreibt ein Verfahren zum Messen der Oberflächenspannung von Flüssigkeiten, bei dem der maximale Blasendruck gemessen wird. Die DE 43 03 133 A1 misst hierfür die Blasenfrequenz.

Die EP 1 464 948 A1 beschreibt eine Vorrichtung zum Messen der Oberflächenspannung von Flüssigkeiten. Hier werden ein Drucksensor und ein Antrieb für die Pumpe nur allgemein angesprochen.

Es ist bis zum jetzigen Zeitpunkt im Bereich der Textil- und Geschirrreinigung, insbesondere im Haushaltsbereich, keine wirtschaftliche und marktfähige Lösung bekannt, mit der die Oberflächenspannung für eine Konzentrationserfassung des Wasch- bzw. Spülmittels und darauf basierend eine automatische Dosierung dieser hinreichend genau gemessen werden kann.

Der Erfindung liegt die Aufgabe zugrunde, ausgehend von der Abhängigkeit der Blasenlebensdauer von der Oberflächenspannung bei einem definierten Gasmassen- bzw. Gasvolumenstrom ein Verfahren und eine Vorrichtung zum dynamischen Messen der Oberflächenspannung einer Flüssigkeit anzugeben, das mit vergleichsweise geringem sensorischen Aufwand für die meisten Anwendungen hinreichend genaue Messergebnisse liefert.

Die Aufgabe wird erfindungsgemäß durch die in den Ansprüchen 1 und 11 angegebenen Merkmale gelöst. Vorteilhafte Weiterbildungen hierzu geben die begleitenden Ansprüche an.

Das erfindungsgemäße Verfahren basiert auf der Abhängigkeit der Blasenlebensdauer $t_{life}$ von der Oberflächenspannung $\sigma$ bei einem in ein Systemvolumen eingeleiteten definierten Gasmassen- bzw. Gasvolumenstrom.

Beim Ausbilden einer Blase am Ende der Kapillare korreliert der Differenzdruck zwischen Druckminimum und Druckmaximum in der Blase mit der Oberflächenspannung $\sigma$. Leitet man einen definierten Gasmassen- bzw. Gasvolumenstrom, für gewöhnlich einen Luftmassen- bzw. Luftvolumenstrom, in das Systemvolumen des pneumatischen Systems ein, strömt unabhängig von der Oberflächenspannung $\sigma$ im gleichen Zeitraum immer die gleiche Gasmasse bzw. -volumen in dieses. Damit hängt die Blasenlebensdauer ebenfalls von der Oberflächenspannung $\sigma$ ab, weil bei einer geringeren Oberflächenspannung $\sigma$ ein geringerer Druck in der Blase aufgebaut wird und folglich bis zum Erreichen des maximalen Druckes weniger Gas im Systemvolumen komprimiert werden muss. Deshalb wird der Zeitpunkt des Druckmaximums bei einer niedrigeren Oberflächenspannung im Vergleich zu einer hohen Oberflächenspannung schneller erreicht. Das neue Verfahren, Blasenlebensdauerverfahren genannt, misst bei einem definierten Gasmassen- bzw. Gasvolumenstrom die Blasenlebensdauer einer in die Flüssigkeit gedrückten Blase und berechnet daraus die Oberflächenspannung der Flüssigkeit.

Die Genauigkeitsanforderungen an einen Wandler von Drucksignalen in Spannungssignale sind im Vergleich zu den bekannten Verfahren mit Messen des Differenzdrucks gering, da es nur notwendig ist, den Zeitpunkt des Druckminimums sowie den Zeitpunkt des darauf folgenden Druckmaximums einer Blase aus dem Drucksignal hinreichend genau zu erfassen. Der Wandler von Drucksignalen in Spannungssignale muss bezüglich der Signalamplitude und -verschiebung weder temperaturkompensiert noch kalibriert sein.

Anstelle von Drucksensoren eignen sich in vorteilhafter Weise einfache und damit kostengünstige Schalldruckwandler, beispielsweise Piezoscheiben. Beim direkten piezoelektrischen Effekt bewirken durch beispielsweise Druckänderungen verursachte mechanische Deformationen eine Verschiebung der Ladungsschwerpunkte der Kristallatome gegeneinander. Im Kristallinneren entsteht eine elektrische Polarisation P und nach außen sind Oberflächenladungen messbar. Da zwischen der Größe der mechanischen Beanspruchung des Piezokristalls und der Menge der Oberflächenladung Proportionalität besteht, lassen sich die Zeitpunkte von Druckminimum und Druckmaximum problemlos als elektrische Signale detektieren. Einfache piezoelektrische Schallwandler werden für den umgekehrten Einsatz in Piezo-Summern massenweise hergestellt und sind außerordentlich preiswert.

Die Erfindung soll anhand eines Ausführungsbeispiels näher erläutert werden. In den zugehörigen Zeichnungen zeigen:

Fig. 1    die Blasenbildung sowie den Verlauf des Blasen- Innendrucks nach einem Blasendruckverfahren,

Fig. 2    ein pneumatisches Systems zur Erläuterung der physi- kalischen Grundlagen der Erfindung,

Fig. 3    Blasendrucksignale verschiedener Oberflächenspannungen bei konstantem Luftmassenstrom,

Fig. 4    Messergebnisse verschiedener Flüssigkeiten,

Fig. 5    einen schematisch dargestellten piezoelektrischen Schalldruckwandler und

Fig. 6    eine Funktionsstruktur für die Oberflächenspannungs- Messung in einer Waschmaschine.

Fig. 7    einen schematischen Schnitt durch einen kompakten Oberflächenspannungs- Sensor, der nach dem erfindungs- gemäßen Verfahren arbeitet.

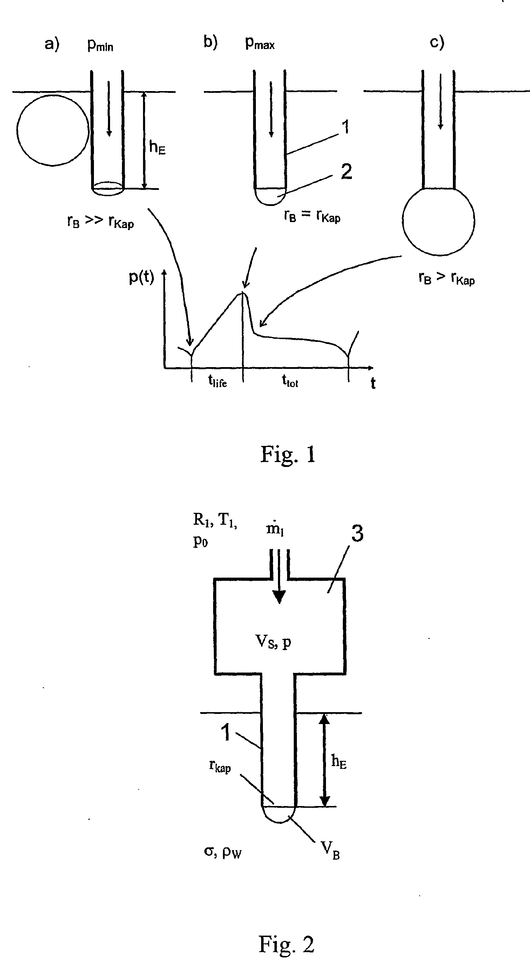

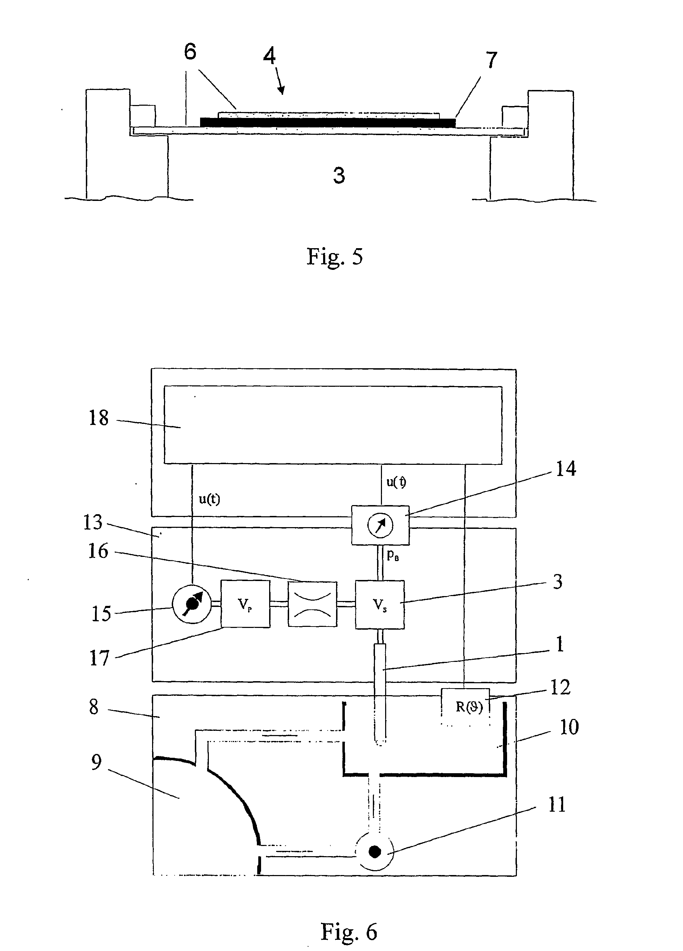

Wie Fig. 1 schematisiert zeigt, wird bei einem Blasendruckverfahren zum Messen der Oberflächenspannung Luft oder ein anderes geeignetes Gas oder Gasgemisch durch eine Kapillare 1 in die zu analysierende Flüssigkeit gedrückt. Ein zu Fig. 5 näher erläuterter Druck - Spannungswandler erfasst den Innendruck p einer sich an der Spitze einer Kapillare 1 bildenden Blase 2. Wie aus der Fig. 1a ersichtlich ist, hat eine neue Blase 2 einen großen Radius $r_B$ >> $r_{Kap}$, und das an die Kapillare 1 angeschlossene, zu Fig. 2 näher erläuterte pneumatische System, steht unter dem geringsten Druck $p_{min}$. Durch nachströmende Luft steigt der Druck $p$ in der Blase 2. Die. Blase 2 wird an der Kapillare 1 ausgewölbt, der Radius der Blase $r_B$ verkleinert sich. Erreicht die Blase 2 ihren minimalen Radius, der annähernd gleich dem Radius der Kapillare ist $r_B = r_{Kap}$, steigt der Druck im Inneren auf das Druckmaximum $p_{max}$ (Fig. 1b). Die Zeit vom Beginn der Bildung einer Blase 2 bis zum Erreichen des Druckmaximums $p_{max}$ gibt das Oberflächenalter bzw. die Blasenlebensdauer $t_{life}$ einer Blase an. Nach dem Überschreiten des Druckmaximums $p_{max}$ platzt die Blase 2 auf: $r_B$ > $r_{Kap}$, und der Druck $p$ im Inneren der Blase 2 sinkt durch die Volumenexpansion schnell ab (Fig. 1c). Danach bläst der Luftstrom die Blase 2 langsam weiter auf, bis diese nach oben abkippt und von der Kapillare 1 abreißt. Die Zeitspanne vom Druckmaximum $p_{max}$ bis zum Abreißen der Blase 2 wird als Totzeit $t_{tot}$ bezeichnet. Anschließend wiederholt sich der Vorgang durch Bildung der nächsten Blase. Die Anzahl der gebildeten Blasen 2 pro Zeiteinheit wird mit Blasenfrequenz $f_B$ bezeichnet.

Die Blasenlebensdauer $t_{life}$ nimmt, wenn ein definierter Gasmassen- bzw. Gasvolumenstrom in das Systemvolumen des pneumatischen Systems eingeleitet wird, im Vergleich zur Blasentotzeit $t_{tot}$ mit sinkender Oberflächenspannung σ stärker ab. Mit der Blasenlebensdauer kann eine Oberflächenspannungs- Änderung somit besser aufgelöst werden als mit der Blasentotzeit. Schon geringe Strömungen in der zu vermessenden Flüssigkeit sowie mechanische Vibrationen beeinflussen den Blasenabriss zufällig und damit die Blasentotzeit und folglich auch die Blasenfrequenz. Es wird ersichtlich, das die Blasenfrequenz ungeeignet für das Erfassen der Oberflächenspannung ist.

Gemäß der offenbarten Erfindung wird die reine Blasenlebensdauer $t_{life}$ einer Blase gemessen, und zwar auf eine Weise, die es erlaubt, mit äußerst kostengünstigen Sensoren hinreichend genaue Ergebnisse zu erreichen.

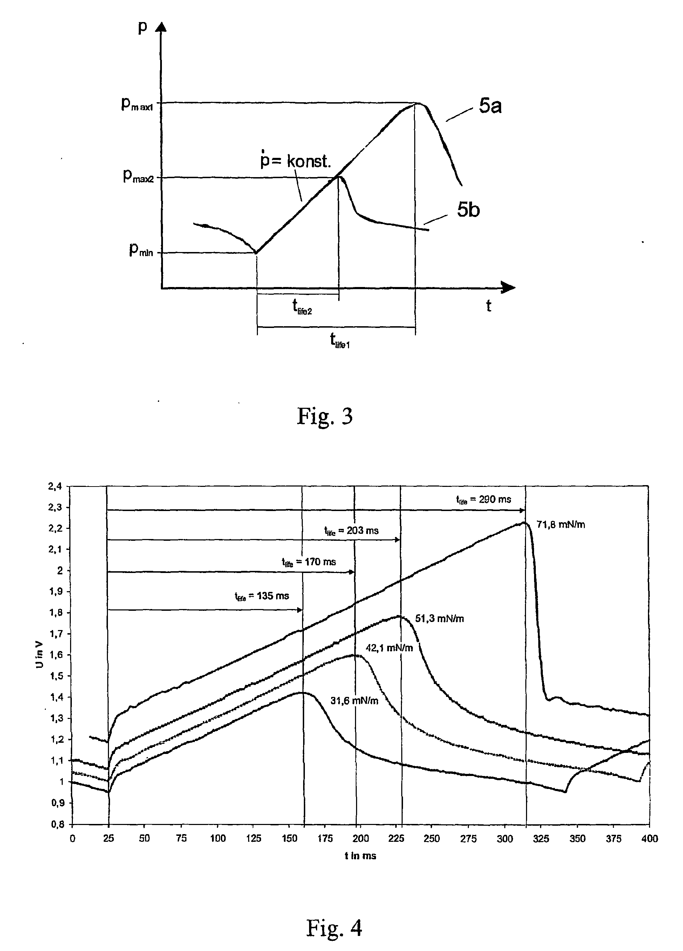

Die Grundzüge des Verfahrens sollen anhand der Figuren 2 und 3 erläutert werden. Zunächst zeigt Fig. 2 schematisiert das pneumatische System zu einem Blasendruckverfahren mit dem Systemvolumen $V_S$, darin eingeschlossen ist das Volumen der Kapillare 1, dem Blasendruck $p$, dem Blasenvolumen $V_B$ und einem Luftmassenstrom $\dot{m}_1$. Für die nachfolgende Berechnung soll ein konstanter Luftmassenstrom $\dot{m}_1$ und eine konstante Lufttemperatur $T_1$ vorausgesetzt sowie die Luft als ideales Gas und ein Druckminimum $p_{min}$ gleich dem hydrostatischen Druck $p_h$ angenommen werden.

Ausgangspunkt der Analyse des pneumatischen Systems ist die thermische Zustandsgleichung eines idealen Gases:

$$pV = mR_G T. \qquad\qquad (3)$$

In das Systemvolumen 3 strömt ein konstanter Luftmassenstrom $\dot{m}_1$ ein. In der Zeit $t_{life}$ steigt der Druck von $p_h$ auf $p_{max}$ = $f(\sigma)$ an. Das Gesamtvolumen $V_G$ vergrößert sich von $V_S$ auf $V_S + V_B$.

Die in der Zeit $t_{life}$ eingeströmte Luftmasse berechnet sich folgendermaßen:

$$\Delta m = \dot{m} \cdot t_{life} . \qquad\qquad (4)$$

Ausgehend von den erfolgten Betrachtungen kann die G1. (3) für den Zeitpunkt des maximalen Blasendruckes folgendermaßen geschrieben werden:

$$\left(\Delta p + p_h\right)\left(V_S + \Delta V\right) = (m_0 + \Delta m)R_{Luft}T_{Luft} \qquad\qquad (5)$$

$$\left(p_{max} - p_h + p_h\right)\left(V_S + V_B\right) = \left(m_0 + \dot{m} \cdot t_{life}\right) R_{Luft} T_{Luft} \, . \qquad (6)$$

$m_0$ berechnet sich mit Gl. *(3)* zu

$$m_0 = \frac{p_h \cdot V_S}{R_{Luft} \cdot T_{Luft}} \, . \qquad (7)$$

Gl. *(7)* in *(6)* eingesetzt ergibt:

$$p_{max}\left(V_S + V_B\right) = \left(\frac{p_h \cdot V_S}{R_{Luft} \cdot T_{Luft}} + \dot{m} \cdot t_{life}\right) R_{Luft} T_{Luft} \, . \qquad (8)$$

Nach $t_{life}$ umgestellt folgt:

$$t_{life} = \frac{p_{max}\left(V_S + V_B\right) - p_h \cdot V_S}{\dot{m} \cdot R_{Luft} T_{Luft}} \, . \qquad (9)$$

Mit dem hydrostatischen Druck:

$$p_h = \rho_W \cdot g \cdot h_E + p_0 \qquad (10)$$

und dem maximalen Druck in Abhängigkeit der Oberflächenspannung (erste Nährung):

$$p_{max} = \frac{2\sigma}{r_{Kap}} + p_h \qquad (11)$$

sowie dem Blasenvolumen bei maximalem Blasendruck:

$$V_B = \frac{2}{3}\pi \cdot r_{Kap}^3 \qquad (12)$$

ergibt sich durch Einsetzen in Gl. *(9)*:

$$t_{life} = \frac{\left(\dfrac{2\sigma}{r_{Kap}} + \rho_W g h_E + p_0\right)\left(V_S + \dfrac{2}{3}\pi \cdot r_{Kap}^3\right) - \left(\rho_W g h_E + p_0\right) \cdot V_S}{\dot{m} \cdot R_{Luft} \cdot T_{Luft}} \, . \qquad (13)$$

Durch Umstellen der Gl. (13) erhält man:

$$t_{life} = \frac{\frac{2\sigma}{r_{Kap}}\left(V_S + \frac{2}{3}\pi \cdot r_{Kap}^3\right) + \left(\rho_W g h_E + p_0\right) \cdot \frac{2}{3}\pi \cdot r_{Kap}^3}{\dot{m} \cdot R_{Luft} \cdot T_{Luft}} \quad . \tag{14}$$

Anhand letztgenannter Gleichung (14) ist zu erkennen, dass die Blasenlebensdauer $t_{life}$ bei einem konstanten Luftmassenstrom linear von der Oberflächenspannung σ einer Flüssigkeit abhängig ist:

$$t_{life} = f(\sigma), \quad \dot{m}_{Luft} = const. \tag{15}$$

In Fig. 3 ist der Druckverlauf einer Blase bei verschiedenen Oberflächenspannungen aufgezeichnet, wobei nicht, wie üblich, die Blasenlebensdauer $t_{life}$ konstant gehalten ist, sondern durch den konstanten eingeleiteten Luftmassenstrom $\dot{m}_1$ der Druckanstieg in der Blase vom Druckminimum $p_{min}$ bis zum Druckmaximum $p_{max1}$ bzw. $p_{max2}$; d$p$/d$t$ = const. Erfindungsgemäß wird nicht die Druckdifferenz Δ$p$ = $p_{max}$ - $p_{min}$ in einer Blase, sondern die Blasenlebensdauer $t_{life}$ einer Blase gemessen. Wie in Fig. 3 dargestellt ist, erreicht der Innendruck 5b einer Blase in einer Flüssigkeit mit einer niedrigeren Oberflächenspannung $\sigma_2$ das Druckmaximum $p_{max2}$ bei einer kürzeren Blasenlebensdauer $t_{life2}$ im Vergleich zum Innendruck 5a einer Blase in einer Flüssigkeit mit einer höheren Oberflächenspannung $\sigma_1$, der das Druckmaximum $p_{max1}$ erst bei einer längeren Blasenlebensdauer $t_{life1}$ erreicht.

Fig. 4 zeigt ein Messdiagramm mit Blasendrucksignalen von Flüssigkeiten mit unterschiedlicher Oberflächenspannung bei einem konstanten Luftmassenstrom. Die Blasendrucksignale haben alle den gleichen Anstieg bis zu einem von der Oberflächenspannung abhängigen maximalen Blasendruck. Das Druckminimum liegt bei den Blasendrucksignalen geringerer Oberflächenspannungen niedriger, weil nach dem Blasenabriss bereits eine Anfangsbelegung der Oberfläche mit Tensiden vorhanden ist und somit am Druckminimum schon eine niedrigere Oberflächenspannung vorhanden ist.

Die Auflösung der Oberflächenspannung durch Messen der Blasenlebensdauer ist abhängig von der Bezugsblasenlebensdauer, welche beispielsweise durch den Luftmassenstrom in Wasser eingestellt wird. Bei einer in Wasser eingestellten Bezugsblasenlebensdauer von 300 ms (siehe Fig. 4) ist bereits eine Empfindlichkeit von 3,9 ms pro 1 mN/m vorhanden. Eine Kalibrierung des Oberflächenspannungs- Sensors kann beispielsweise in Wasser mit bekannter Temperatur und dadurch bekannter Oberflächenspannung vorgenommen werden, in dem die Blasenlebensdauer gemessen wird und diese als Bezugsblasenlebensdauer gesetzt wird. Bei diesem Vorgehen kann in vorteilhafter Weise auf eine Regelung des Gasmassen- bzw. Gasvolumenstromes verzichtet werden.

Fig. 5 zeigt den Einsatz eines piezoelektrischen Wandlers als Schalldruckwandler für das vorgestellte Verfahren. An das Systemvolumen 3 ist an geeigneter Stelle ein piezoelektrischer Schalldruckwandler 4 angeschlossen. Der piezoelektrische Schalldruckwandler 4 besteht aus zwei metallischen Kontaktflächen 6 mit Anschlussdrähten, zwischen denen ein so genannter Piezokristall 7 aufgeklebt ist. Der piezoelektrische Schalldruckwandler 4 erzeugt bei Druckänderung im pneumatischen System 3 eine Ladungsverschiebung an den Kontaktflächen 6. Die zeitliche Änderung des Druckes bzw. die Ableitung des Blasendruckes nach der Zeit d$p$/d$t$ ist proportional zum außen gemessenen Strom. Durch Integration des gemessenen Stromes mittels einer Auswerteschaltung kann ein Spannungssignal u(t) erzeugt werden, welches proportional zum Drucksignal ist. Da erfindungsgemäß nur die Zeitspannen $t_{life}$ zwischen Druckminimum $p_{min}$ und Druckmaximum $p_{max}$ interessieren, nicht aber die Höhe des Maximaldrucks oder maximalen Differenzdrucks selbst, verringern sich die Kosten für eine Auswerteschaltung wesentlich. Die Zeit $t_{life}$ lässt sich ihrerseits mit einem preiswerten Mikrokontroller ermitteln.

Fig. 6 zeigt eine Funktionsstruktur für eine Anwendung in einer Waschmaschine unter Verwendung des erfindungsgemäßen Blasenlebensdauerverfahrens.

Im Fluidik- Teil 8 der Waschmaschine ist im Bypass zu einem Laugenbehälter 9 ein Messgefäß 10 angeordnet, dem von einer Laugenpumpe 11 prozessgesteuert Waschlauge zugeführt und dort durchmischt wird. Da die Oberflächenspannung einer Flüssigkeit sehr stark temperaturabhängig ist, misst ein Temperatursensor 12 die Laugentemperatur $\vartheta$.

Die Pneumatik 13 besteht aus der Kapillare 1, dem Systemvolumen 3, dem Drucksensor oder dem Schalldruckwandler 14 und der konstanten Luftmengenstromquelle 15,16,17. Im Beispiel drückt eine Luftpumpe 15, beispielsweise eine Membranpumpe mit Motor- oder Piezoantrieb, über ein Puffervolumen 17 durch eine Drossel 16 Luft in das pneumatische System, an das einerseits der Drucksensor oder der Schalldruckwandler 14 und andererseits eine Kapillare 1 angeschlossen sind. Die Drossel 16 dient zum Einstellen des Arbeitspunktes der Luftpumpe 15 und verhindert als möglichst großer pneumatischer Widerstand Rückwirkungen des Blasendrucks auf deren Arbeitspunkt. Eine andere Möglichkeit ist das Anschließen eines Gasdruckbehälters. Die Kapillare 1 taucht mit ihrer Spitze in das Messgefäß 10.

Eine nicht näher dargestellte Elektronik 18 wertet die vom Drucksensor oder Schalldruckwandler 14 abgenommenen Signale u(t) sowie die vom Temperatursensor 12 herrührenden Signale aus und steuert den Messprozess. Sie hat eine Schnittstelle zur Waschmaschinensteuerung.

Der Oberflächenspannungs- Sensor wird in Wasser mit bekannter Temperatur und damit bekannter Oberflächenspannung ($\sigma$) kalibriert, indem, wie bereits beschrieben, die Blasenlebensdauer ($t_{life}$) gemessen und daraus der Gasmassen- bzw. Gasvolumenstrom ($\dot{m}_1$) berechnet wird. Der Mess- oder Kalibriervorgang beginnt mit dem Einschalten der Pumpe (15), wobei nach einer definierten Zeit, in der sich im Puffervolumen (17) ein hinreichend konstanter Druck aufgebaut hat, die Blasenlebensdauer ($t_{life}$) erfasst wird. Bei einer Verwendung des Oberflächenspannungs- Sensors in einer Waschmaschine wird der Oberflächenspannungs- Sensor zu Zeiten des Wasserzulaufs kalibriert, wobei bei Mess- und Kalibriervorgängen die Waschmaschinentrommel stillsteht.

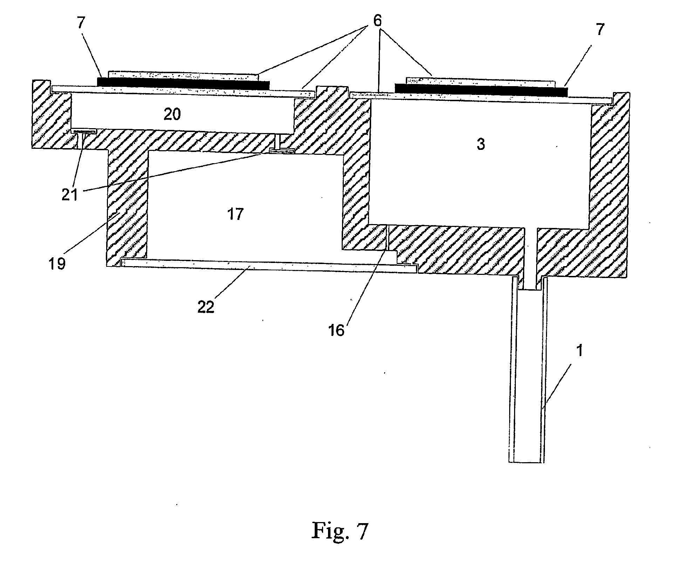

Fig. 7 zeigt einen schematischen Schnitt durch einen kompakten Oberflächenspannungssensor, der nach dem erfindungsgemäßen Verfahren arbeitet. In diesem kompakten Oberflächenspannungssensor sind eine Luftpumpe, ein Puffervolumen, eine Drossel, das Systemvolumen, der piezoelektrische Schalldruckwandler und die Kapillare integriert.

Der kompakten Oberflächenspannungssensor besteht aus einem Grundkörper 19, an dem ein Anschluss für die Kapillare 1 sowie der Systemvolumenraum 3, die Drossel 16, der Raum für das Puffervolumen 17, ein Pumpenraum 20 und Pumpenventile mit Einsätzen für Ventilklappen 21 ausgebildet sind.

Das Systemvolumen 3 wird durch den piezoelektrischen Wandler 4, der zu Fig. 5 näher beschrieben ist, verschlossen. Das Puffervolumen 17 ist durch einen Deckel 22 abgedichtet. Ein piezoelektrischer Wandler 4 bestehend aus zwei metallischen Kontaktflächen 6 mit Anschlussdrähten, zwischen denen ein so genannter Piezokristall 7 aufgeklebt ist, verschließt den Pumpenraum 20 und bildet den Membranantrieb der Luftpumpe 15.

Ein derartig gestalteter Oberflächenspannungssensor kann im Plastikspritzverfahren äußerst kostengünstig hergestellt werden.

## Patentansprüche

1. Verfahren zum Messen der Oberflächenspannung von Flüssigkeiten nach dem Blasendruckprinzip, wobei bei einem definierten Gasmassen- bzw. Gasvolumenstrom ein Blasenparameter an einer in die Flüssigkeit getauchten Kapillarspitze (1) erfasst und daraus die Oberflächenspannung ($\sigma$) berechnet wird, **dadurch gekennzeichnet, dass** die Zeit bzw. Blasenlebensdauer ($t_{life}$) zwischen dem Druckminimum ($p_{min}$) und dem Druckmaximum ($p_{max}$) bei einem definierten Gasmassen- bzw. Gasvolumenstrom ($m_l$) und daraus resultierend einem definierten Druckanstieg (dp/dt) einer Blase (2) gemessen wird, wobei daraus die Oberflächenspannung errechnet wird.

2. Verfahren nach Anspruch 1, **dadurch gekennzeichnet, dass** die Blasenlebensdauer ($t_{life}$) mit Hilfe eines Drucksensors (14) gemessen wird, der die Zustände Druckminimum ($p_{min}$) und Druckmaximum ($p_{max}$) an einer Blase (2) zeitlich detektiert und signalisiert.

3. Verfahren nach Anspruch 2, **dadurch gekennzeichnet, dass** der Drucksensor (14) die Drucksignale Druckminimum ($p_{min}$) und Druckmaximum ($p_{max}$) in Spannungssignale (u(t)) umwandelt.

4. Verfahren nach Anspruch 2 oder 3, **dadurch gekennzeichnet, dass** anstelle des Drucksensors (14) ein Schalldruckwandler wie Kondensator-, Tauchspulen-, Kristall-, Kohlemikrofon und Piezo- Scheibe dient.

5. Verfahren nach Anspruch 1, **dadurch gekennzeichnet, dass** zur Erzeugung eines definierten Gasmassen- bzw. Gasvolumenstromes ($m_l$) eine Membranpumpe (15) mit nachgeschalteter Drossel (16) dient.

6. Verfahren nach Anspruch 5, **dadurch gekennzeichnet, dass** zwischen der Membranpumpe (15) und der Drossel (16) ein Puffervolumen (17) zur Glättung des definierten Gasmassen- bzw. Gasvolumenstromes ($m_l$) dient.

7. Verfahren nach Anspruch 1, **dadurch gekennzeichnet, dass** zur Erzeugung eines definierten Gasmassen- bzw. Gasvolumenstromes ($m_i$) ein vorzugsweise nachfüllbarer Gasdruckbehälter mit nachgeschalteter Drossel (16) dient.

8. Verfahren nach Anspruch 1, **dadurch gekennzeichnet, dass** der Oberflächenspannungs-Sensor in Wasser mit bekannter Temperatur und damit bekannter Oberflächenspannung ($\sigma$) kalibriert wird, indem die Blasenlebensdauer ($t_{life}$) gemessen und daraus der Gasmassen- bzw. Gasvolumenstrom ($m_l$) berechnet wird.

9. Verfahren nach Anspruch 6, **dadurch gekennzeichnet, dass** ein Mess-oder Kalibriervorgang mit dem Einschalten der Pumpe (15) beginnt und nach einer definierten Zeit, in der sich im Puffervolumen (17) ein hinreichend konstanter Druck aufgebaut hat, die Blasenlebensdauer ($t_{life}$) erfasst wird.

10. Verwendung eines Oberflächenspannungs-Sensors mit einem Verfahren nach einem der vorhergehenden Ansprüche in einer Waschmaschine, wobei zu Zeiten des Wasserzulaufs der Oberflächenspannungs-Sensor kalibriert wird, und wobei bei Mess- und Kalibriervorgängen die Waschmaschinentrommel stillsteht.

11. Vorrichtung zum Messen der Oberflächenspannung von Flüssigkeiten, mit einem Verfahren nach mindestens einem der Ansprüche 1 bis 9, **gekennzeichnet durch** einen kompakten Aufbau, welcher einen Grundkörper (19) aufweist, an dem ein Anschluss für eine Kapillare (1) sowie ein Systemvolumenraum (3), eine Drossel (16), ein Raum für das Puffervolumen (17), ein Pumpenraum (20) und Pumpenventile mit Einsätzen für Ventil-klappen (21) ausgebildet sind, und die Kapillare (1) selbst, einen piezoelektrischen Wandler (4), der den Systemvolumenraum (3) verschließt, Ventilklappen (21), einen Deckel (22) zum Verschließen des Puffervolumens (17) und einen weiteren piezoelektrischen Wandler (4) als Antrieb für eine Luftpumpe (15), wobei eine Elektronik (18) vorgesehen ist, die derart ausgebildet ist, dass sie gemäß dem Verfahren nach Anspruch 1 aus gemessenen Werten für den Druckanstieg einer Blase die Oberflächenspannung berechnet.

## Claims

1. Method for measuring the surface tension of liquids using the bubble pressure principle, where a bubble parameter is recorded at a capillary tip (1) immersed in the liquid at a defined gas mass or gas volume flow and the surface tension ($\sigma$) is calculated therefrom, **characterized in that** the time or bubble life ($t_{life}$) between the pressure minimum ($P_{min}$) and the pressure maximum ($P_{max}$) at a defined gas mass or gas volume flow ($m_1$), and as a result a defined pressure rise (dp/dt) of a bubble (2) is measured, the surface tension being calculated therefrom.

2. Method according to Claim 1, **characterized in that** the bubble life ($t_{life}$) is measured with the aid of a pressure sensor (14) that detects the times of the pressure minimum ($P_{min}$) and pressure maximum ($P_{max}$) states at a bubble (2) and signals them.

3. Method according to Claim 2, **characterized in that** the pressure sensor (14) converts the pressure minimum ($P_{min}$) and pressure maximum ($p_{max}$) signals into voltage signals (u(t)).

4. Method according to Claim 1 or 2, **characterized in that** a sound pressure converter such as a capacitor, moving-coil, crystal, carbon microphone and piezo disc is used instead of the pressure sensor (14).

5. Method according to Claim 1, **characterized in that** a diaphragm pump (14) with downstream throttle (16) is used for generating a defined gas mass or gas volume flow ($m_1$).

6. Method according to Claim 5, **characterized in that** a buffer volume (17) for smoothing the defined gas mass or gas volume flow ($m_1$) is used between the diaphragm pump (15) and the throttle (16).

7. Method according to Claim 1, **characterized in that** a preferably refillable gas pressure container with downstream throttle (16) is used for generating a defined gas mass or gas volume flow ($m_1$).

8. Method according to Claim 1, **characterized in that** the surface tension sensor is calibrated in water with known temperature and hence known surface tension ($\sigma$) by measuring the bubble life ($t_{life}$) and calculating therefrom the gas mass or gas volume flow ($m_1$).

9. Method according to Claim 6, **characterized in that** a measuring or calibration process starts with switch-on of the pump 15 and records the the bubble life ($t_{life}$) after a defined time in which a sufficiently constant pressure has built up in the buffer volume (17).

10. Use of a surface tension sensor with a method according to one of the preceding claims in a washing machine, where the surface tension sensor is calibrated at the times of water inflow and where the washing machine drum is stationary during measuring or calibration processes.

11. Device for measuring the surface tension of liquids with a method according to at least one of Claims 1 to 9, **characterized by** a compact structure having a basic element (19) on which are provided a connection for a capillary (1) as well as a system volume area (3), a throttle (16), an area for the buffer volume (17), a pump area (20) and pump valves with inserts for valve flaps (21), and the capillary (1) itself, a piezo-electric converter (4) closing the system volume area (3), valve flaps (21), a cover (22) for closing the buffer volume (17), and a further piezo-electric converter (4) to drive an air pump (15), where an electronic unit (18) is provided which is designed such that it calculates the surface tension in accordance with the method of Claim 1 from measured values for the pressure increase of a bubble.

**Revendications**

1. Procédé pour mesurer la tension superficielle de liquides selon le principe de la pression de bulle, dans lequel, pour un flux massique de gaz ou un débit volumétrique de gaz défini, un paramètre de bulle est saisi sur une pointe capillaire (1) plongée dans le liquide, et à partir duquel est calculée la tension superficielle ($\sigma$), **caractérisé en ce que** le temps ou la durée de vie ($t_{life}$) d'une bulle (2) entre le minimum de pression ($p_{min}$) et le maximum de pression ($p_{max}$) est mesuré(e) sous un flux massique de gaz ou un débit volumétrique de gaz défini ($m_1$) et un accroissement de pression défini (dp/dt) en résultant, la tension superficielle étant calculée à partir de ladite mesure.

2. Procédé selon la revendication 1, **caractérisé en ce que** la durée de vie de la bulle ($t_{life}$) est mesurée à l'aide d'un capteur de pression (14) qui détecte chronologiquement et transforme en signaux les états minimum de pression ($p_{min}$) et maximum de pression ($p_{max}$) sur une bulle (2).

3. Procédé selon la revendication 2, **caractérisé en ce que** le capteur de pression (14) transforme les signaux de pression minimum de pression ($p_{min}$) et maximum de pression ($p_{max}$) en signaux de tension (u(t)).

4. Procédé selon la revendication 2 ou 3, **caractérisé en ce qu'**au lieu du capteur de pression (14) est utilisé un convertisseur de pression acoustique tel qu'un microphone électrostatique, électrodynamique, à cristal, à la grenaille de carbone et un disque piézo.

5. Procédé selon la revendication 1, **caractérisé en ce qu'**est utilisée une pompe à diaphragme (15) avec élément d'étranglement (16) en aval pour créer un flux massique de gaz ou un débit volumétrique de gaz défini ($m_1$).

6. Procédé selon la revendication 5, **caractérisé en ce qu'**entre la pompe à diaphragme (15) et l'élément d'étranglement (16) un volume tampon (17) sert à lisser le flux massique de gaz ou le débit volumétrique de gaz défini ($m_1$).

7. Procédé selon la revendication 1, **caractérisé en ce qu'**est utilisé un réservoir de gaz sous pression, de préférence rechargeable, avec un élément d'étranglement (16) en aval pour créer un flux massique de gaz ou un débit volumétrique de gaz défini ($m_1$).

8. Procédé selon la revendication 1, **caractérisé en ce que** le capteur de tension superficielle est calibré dans de l'eau à une température connue et donc sous une tension superficielle ($\sigma$) connue, en mesurant la durée de vie de la bulle ($t_{life}$) et en calculant à partir de ladite mesure le flux massique de gaz ou le débit volumétrique de gaz ($m_1$).

9. Procédé selon la revendication 6, **caractérisé en ce qu'**une opération de mesure ou de calibrage commence avec la mise en service de la pompe (15), et que la durée de vie de la bulle ($t_{life}$) est saisie après un temps défini pendant lequel une pression constante suffisante s'est établie dans le volume tampon (17).

10. Mise en oeuvre dans une machine à laver d'un capteur de tension superficielle avec un procédé selon l'une des revendications précédentes, dans laquelle le capteur de tension superficielle est calibré au moment de l'arrivée de l'eau, et le tambour de la machine à laver est immobilisé lors des opérations de mesure et de calibrage.

11. Dispositif pour mesurer la tension superficielle de liquides avec un procédé selon au moins l'une des revendications 1 à 9, **caractérisé par** une structure compacte présentant un corps de base (19), sur lequel sont formés un raccord pour un tube capillaire (1) ainsi qu'un espace de volume systémique (3), un élément d'étranglement (16), un espace pour le volume tampon (17), un espace pour la pompe (20) et des soupapes de pompe avec cages pour clapets de soupape (21), et le tube capillaire (1) lui-même, un convertisseur piézoélectrique (4) qui ferme l'espace de volume systémique (3), des clapets de soupape (21), un couvercle (22) pour fermer le volume tampon (17), et un autre convertisseur piézoélectrique (4) faisant office d'entraînement pour une pompe à air (15), sachant qu'est prévue une unité électronique (18) conçue de
manière telle qu'elle calcule la tension superficielle à partir des valeurs mesurées de l'accroissement de pression
d'une bulle conformément au procédé selon la revendication 1.

Fig. 1

Fig. 2

Fig. 3

Fig. 4

EP 1 851 528 B1

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19755291 C1
- DE 20318463 U1
- EP 0760472 B1
- DE 19636644 C1
- DE 4303133 A1
- EP 1464948 A1